(19) 

**Europäisches Patentamt**
**European Patent Office**
**Office européen des brevets**

(11) **EP 3 940 415 A1**

(12) **EUROPEAN PATENT APPLICATION**

(43) Date of publication:
**19.01.2022 Bulletin 2022/03**

(21) Application number: **21170888.8**

(22) Date of filing: **28.04.2021**

(51) International Patent Classification (IPC):
**G01S 7/487** (2006.01)  **G01S 17/87** (2020.01)
**G01S 17/89** (2020.01)  **G01S 17/931** (2020.01)

(52) Cooperative Patent Classification (CPC):
**G01S 7/487; G01S 17/87; G01S 17/89;**
**G01S 17/931**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **15.07.2020 JP 2020121185**

(71) Applicant: **FUJITSU LIMITED**
**Kanagawa 211-8588 (JP)**

(72) Inventors:
• **Tezuka, Koichi**
  **Kanagawa, 211-8588 (JP)**
• **Iida, Koichi**
  **Kanagawa, 211-8588 (JP)**
• **Sakai, Katsushi**
  **Kanagawa, 211-8588 (JP)**
• **Yanai, Kosuke**
  **Fukuoka, 814-8588 (JP)**

(74) Representative: **Hoffmann Eitle**
**Patent- und Rechtsanwälte PartmbB**
**Arabellastraße 30**
**81925 München (DE)**

(54) **DISTANCE MEASUREMENT DEVICE, DISTANCE MEASUREMENT METHOD, AND PROGRAM**

(57)    A distance measurement device includes a plurality of laser sensors and a control unit. The plurality of laser sensors configured to project a laser beam and receive reflected light from a measurement target that moves within a measurement region. The control unit configured to drive, based on the measurement region and a provision position of the plurality of laser sensors, each of the laser sensors at a light emission cycle in which a light receiving window that receives reflected light of own light and an interference risk range are included the interference risk range being a range in which an interference is caused by a laser beam from another laser sensor. The control unit controls to laser beam emission timings of the plurality of laser sensors so as to be different from each other.

FIG. 1

EP 3 940 415 A1

**Description**

[Field]

The embodiments discussed herein are related to a distance measurement device, a distance measurement method, and a program.

[Background Art]

A scanning-type distance measurement device using a laser beam (for example, laser pulse) is referred to as a laser radar or a laser sensor or the like. The laser sensor reflects a laser beam, for example, by a two-dimensional Micro Electro Mechanical System (MEMS) mirror and two-dimensionally scans a measurement target so as to measure a distance to the measurement target. Specifically, for example, by measuring a Time Of Flight (TOF) from a time when the laser sensor emits the laser beam to a time when the laser beam is reflected by the measurement target and returns to the laser sensor, it is possible to measure the distance to the measurement target.

The laser sensor can be applied to sensing of a person, an object, a space, or the like, and in a case of such an application, it is desirable to perform sensing in real time and with high resolution. Furthermore, the laser sensor can be applied to generation of a distance image and three-dimensional data with no occlusion, for example, by simultaneously measuring an exercising person who is an example of a moving object from a plurality of directions. The distance image is a three-dimensional distance coordinate map formed by a point cloud in which distance values at respective focusing points are arranged in the order of raster-scanned samples. The three-dimensional data can be generated by converting the distance image, for example, using the distance value and projected light angle data. For example, in artistic gymnastics, if a posture of an athlete can be quantitatively measured from a distance image and three-dimensional data of the athlete, the posture can be used as reference data when a judge performs rating.

In this way, in a case where the plurality of laser sensors is used, when each distance measurement device projects a laser beam having substantially the same wavelength, an interference between the laser sensors occurs. Specifically, for example, when a first laser sensor projects a first laser beam and receives reflected light from a measurement target, if a second laser beam projected by a second laser sensor and reflected light from the measurement target of the second laser beam are received, this deteriorates measurement accuracy of the first laser sensor.

Typically, in order to avoid the interference between the plurality of laser sensors, a technique for adjusting phases of laser beams projected by respective laser sensors (for example, refer to PTL 1) and a technique for setting a front light projection cycle and a rear light projection cycle to be different from each other (for example, refer to PTL 2) have been proposed.

Furthermore, in order to avoid the interference between the plurality of laser sensors, a technique for projecting light with a different delay time for each laser sensor has been proposed (for example, refer to PTL 3). This case is an application to a distance measuring type security sensor. Because a repetition cycle is a long cycle, the delay time is set to be longer with respect to a measurement time of the TOF.

Therefore, according to the related art to avoid the interference between the plurality of laser sensors, it is difficult to generate a distance image in a short cycle. That is, for example, it is difficult to generate a high-resolution distance image at high speed.

[Citation List]

[Patent Literature]

[PTL 1] Japanese Laid-open Patent Publication No. 2018-063222.
[PTL 2] Japanese Laid-open Patent Publication No. 2017-125682.
[PTL 3] Japanese Laid-open Patent Publication No. 2013-235390.

[Summary of Invention]

[Technical Problem]

According to related art for avoiding an interference between a plurality of laser sensors, it is difficult to generate a high-resolution distance image at high speed.

Therefore, in one aspect, an object is to provide a distance measurement device, a distance measurement method, and a program that can avoid an interference between a plurality of laser sensors and generate a high-resolution distance image at high speed.

[Solution to Problem]

According to one aspect, a distance measurement device includes a plurality of laser sensors and a control unit. The plurality of laser sensors configured to project a laser beam and receive reflected light from a measurement target that moves within a measurement region. The control unit configured to drive, based on the measurement region and a provision position of the plurality of laser sensors, each of the laser sensors at a light emission cycle in which a light receiving window that receives reflected light of own light and an interference risk range are included the interference risk range being a range in which an interference is caused by a laser beam from another laser sensor. The control unit controls to laser beam emission timings of the plurality of laser sensors so as to be different from each other.

[Effects of Invention]

According to one aspect, it is possible to avoid an interference between a plurality of laser sensors and generate a high-resolution distance image at high speed.

[Brief Description of Drawings]

FIG. 1 is a schematic diagram for explaining measurement processing of a distance measurement device according to one embodiment;
FIG. 2 is a timing chart for explaining operations of laser sensors illustrated in FIG. 1;
FIG. 3 is a block diagram illustrating a configuration of a first embodiment of the distance measurement device;
FIG. 4 is a block diagram illustrating an example of a computer;
FIG. 5 is a flowchart for explaining an example of light receiving window determination processing;
FIG. 6 is a schematic diagram for explaining an example of the light receiving window determination processing;
FIG. 7 is a timing chart for explaining an operation of a laser sensor illustrated in FIG. 6;
FIG. 8 is a flowchart for explaining an example of interference risk range determination processing and light emission cycle determination processing;
FIG. 9 is a schematic diagram for explaining an example of the interference risk range determination processing and the light emission cycle determination processing;
FIG. 10 is a timing chart for explaining operations of laser sensors illustrated in FIG. 9;
FIG. 11 is a schematic diagram for explaining measurement processing according to the first embodiment of the distance measurement device;
FIG. 12 is a diagram for explaining operations of a laser sensors according to the first embodiment of the distance measurement device;
FIG. 13 is a flowchart for explaining the measurement processing according to the first embodiment of the distance measurement device;
FIG. 14 is a block diagram illustrating a configuration of a second embodiment of a distance measurement device;
FIG. 15 is a schematic diagram for explaining measurement processing according to the second embodiment of the distance measurement device;
FIG. 16 is a schematic diagram for explaining the measurement processing according to the second embodiment of the distance measurement device; and
FIG. 17 is a diagram for explaining operations of laser sensors according to the second embodiment of the distance measurement device.

[Description of Embodiments]

A distance measurement device according to the disclosure generates a distance image formed by a point cloud in which distance values at respective focusing points are arranged in the order of samples obtained by raster-scanning a measurement target that moves within a three-dimensional measurement region. Each laser sensor is driven based on a measurement region and provision positions of a plurality of laser sensors. Specifically, for example, each laser sensor is driven at the same light emission cycle in which a light receiving window for receiving only reflected light of own light and an interference risk range in which an interference caused by a laser beam from another laser sensor is concerned are not overlapped and laser beam emission timings of the plurality of laser sensors are deviated by light emission delay times different from each other with respect to a laser sensor to be a reference.

Hereinafter, each embodiment of a distance measurement device, a distance measurement method, and a program according to the disclosure will be described with reference to the drawings.

[Embodiments]

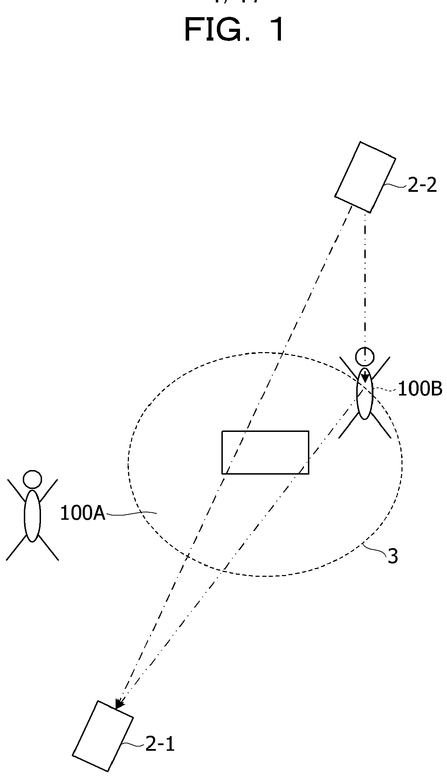

FIG. 1 is a schematic diagram for explaining measurement processing of a distance measurement device according to one embodiment. In the example illustrated in FIG. 1, for convenience of explanation, two distance measurement devices measure two measurement targets. Laser sensors (hereinafter, may be also simply referred to as "sensor") 2-1 and 2-2 are examples of a scanning-type distance measurement device. A measurement target 100 to be measured moves within a three-dimensional measurement region 3. The measurement target 100 is, for example, a gymnast. For convenience, a measurement target 100 at a position A in the measurement region 3 is referred to as a measurement target 100A, and a measurement target 100 at a position B in the measurement region 3 is referred to as a measurement target 100B. Furthermore, the measurement region 3 is, for example, a performance area where a gymnast gives a performance. In FIG. 1, an alternate long and short dash line indicates a laser beam that directly reaches the sensor 2-1 of laser beams emitted from the sensor 2-2, and an alternate long and two short dashes line indicates a laser beam projected from the sensor 2-2 toward the measurement target 100B. In this example, the laser beam that is indicated by the alternate long and short dash line and is projected from the sensor 2-2 reaches the sensor 2-1, and an interference occurs due to direct light. Furthermore, reflected light reflected by the measurement target 100B of the laser beam that is indicated by the alternate long and two short dashes and is projected from the sensor 2-2 also reaches the sensor 2-1, and an interference occurs due to the reflected light.

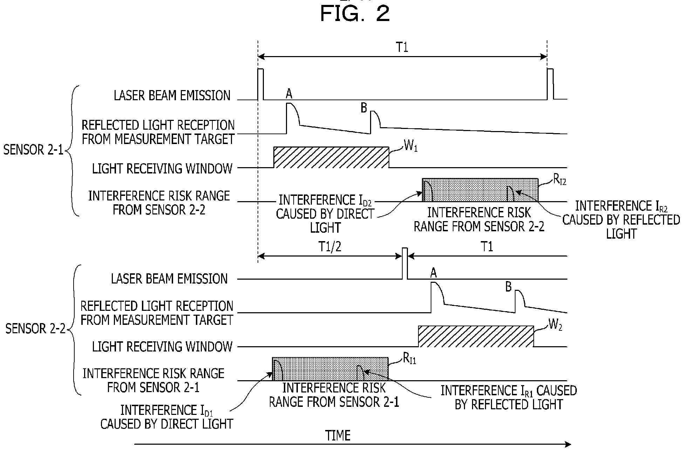

FIG. 2 is a timing chart for explaining operations of the laser sensors illustrated in FIG. 1. FIG. 2 illustrates timings of laser beam emission, reflected light reception from a measurement target, a light receiving window, and an interference risk range from the another sensor 2-1 or 2-2 of each of the sensors 2-1 and 2-2. Laser beam emission cycles of the sensors 2-1 and 2-2 are the same light emission cycle T1. The laser beam emission timing of the sensor 2-2 is triggered by the laser beam emission timing of the sensor 2-1 and is deviated by delaying only by a light emission delay time of 1/2 (T/2) of the light emission cycle T1 with respect to the laser beam emission timing of the sensor 2-1. Regarding the reception timing of the reflected light from the measurement target, A indicates reflected light from the measurement target 100A, and B indicates reflected light from the measurement target 100B. In FIG. 2, a hatched part $W_1$ indicates a light receiving window of the sensor 2-1, and a matte part $R_{I2}$ indicates an interference risk range from the sensor 2-2, a part $I_{D2}$ indicates an interference caused by direct light, and a part $I_{R2}$ indicates an interference caused by reflected light. Furthermore, a hatched part $W_2$ indicates a light receiving window of the sensor 2-2, and a matte part $R_{I1}$ indicates an interference risk range from the sensor 2-1, a part $I_{D1}$ indicates an interference caused by direct light, and a part $I_{R1}$ indicates an interference caused by reflected light. A laser beam projected by one sensor is received by another sensor directly or in a reflected manner, and this causes an interference.

The light receiving window $W_1$ is a period that is immediately after light projection (laser beam emission) by the sensor 2-1 and that is set to receive only reflected light (of own light) of the laser beam projected by the sensor 2-1 reflected by the measurement targets 100A and 100B. Similarly, the light receiving window $W_2$ is immediately after light projection (laser beam emission) by the sensor 2-2 and is set to receive only reflected light (of own light) of the laser beam projected by the sensor 2-2 reflected by the measurement targets 100A and 100B. Furthermore, the interference risk range $R_{I2}$ from the sensor 2-2 that is set for the sensor 2-1 is a period in which the interference $I_{D2}$ caused by direct light that is the laser beam projected by the sensor 2-2 and the interference $I_{R2}$ caused by the reflected light of the laser beam projected by the sensor 2-2 are concerned. Similarly, the interference risk range $R_{I1}$ from the sensor 2-1 that is set for the sensor 2-2 is a period in which the interference $I_{D1}$ caused by direct light that is the laser beam projected by the sensor 2-1 and an interference $I_{R1}$ caused by the reflected light of the laser beam projected by the sensor 2-1 are concerned. The interference risk range $R_{I2}$ from the sensor 2-2 is a period immediately after the light projection (laser beam emission) by the sensor 2-2, and the interference risk range $R_{I1}$ from the sensor 2-1 is a period immediately after the light projection (laser beam emission) by the sensor 2-1.

A laser beam projected by one sensor is received by another sensor directly or in a reflected manner, and this causes an interference. Therefore, in the embodiment, as described later, the interferences described above are avoided by adjusting a light emission delay time of a sensor that projects a laser beam and setting of a light receiving window of a sensor that receives a laser beam.

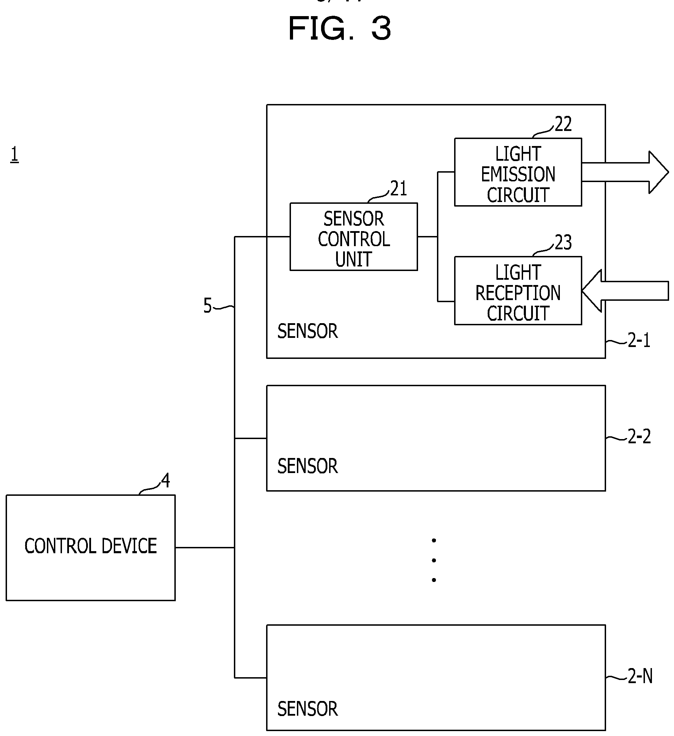

FIG. 3 is a block diagram illustrating a configuration of a first embodiment of the distance measurement device. A distance measurement device 1 illustrated in FIG. 3 includes N (N is natural number equal to or more than two) sensors 2-1 to 2-N and a control device 4. FIG. 1 described above corresponds to a case of N = 2. The sensors 2-1 to 2-N have the same configuration and are connected to the control device 4 via a network 5. The network 5 may be a wired or wireless network. Furthermore, the network 5 may be a combination of a wired and wireless networks. Each of the sensors 2-1 to 2-N generates a distance image formed by a point cloud in which distance values at respective focusing points are arranged in the order of raster-scanned samples.

Each of the sensors 2-1 to 2-N includes a sensor control unit 21, a light emission circuit 22, and a light reception circuit 23. The sensor control unit 21 controls projection of a laser beam by the light emission circuit 22 and reception of a laser beam by the light reception circuit 23 and generates a distance image using a well-known method. The light emission circuit 22 emits a laser beam (in this example, laser pulse) with a predetermined output at a predetermined time in response to an instruction from the sensor control unit 21. A light emission start time is set to zero delay (0) or a time after a certain delay time according to an instruction from the control device 4. The light reception circuit 23 receives reflected light of own light that is emitted by the light emission circuit 22, reflected by the measurement target 100, and returned. At the time of light reception, a light receiving window is set based on a time according to a moving distance of the measurement target 100. As will be described later, although the N sensors 2-1 to 2-N are used for measurement, it is possible to acquire three-dimensional data (3D data) of a three-dimensional shape (3D shape) or the like of the measurement target 100 in a state with no interference.

For example, because the sensor 2-1 does not receive interfering light from the another sensors 2-2 to 2-N in a range other than the light receiving window set for the light reception circuit 23, an error caused by the interference does not affect the measurement result.

Furthermore, the light emission cycle of each of the sensors 2-1 to 2-N is defined to include the earliest and the latest light receiving windows among the light receiving windows of all the sensors 2-1 to 2-N. Therefore, because interfering light from the another sensors does not enter the light receiving window of each of the sensors 2-1 to 2-N, it is possible to avoid a malfunction caused by incident interfering light.

For example, each of the sensors 2-1 to 2-N may have a well-known configuration that reflects a laser beam emitted from a light emission element by a two-axis mirror, two-dimensionally scans a measurement target, and measures a distance to the measurement target on the basis of an output of a light reception element that receives the laser beam reflected by the measurement target. The two-axis mirror is, for example a two-dimensional Micro Electro Mechanical System (MEMS) mirror. In this case, the light emission circuit 22 includes the light emission element, the two-dimensional MEMS mirror, or the like, and the light reception circuit 23 includes the light reception element or the like.

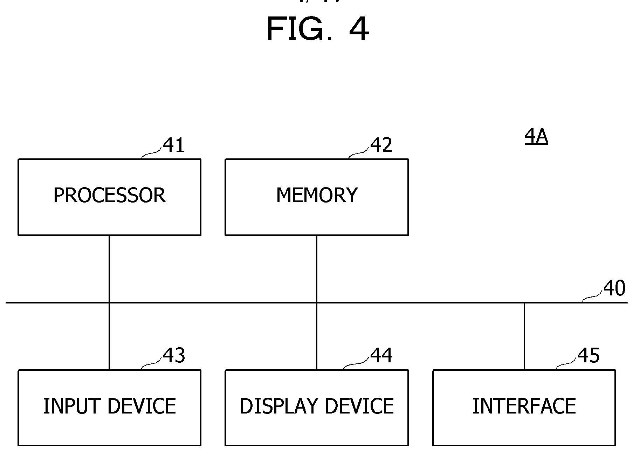

The control device 4 can be formed by a computer or the like. FIG. 4 is a block diagram illustrating an example of a computer. A computer 4A illustrated in FIG. 4 includes a processor 41, a memory 42, an input device 43, a display device 44, and an interface (or communication device) 45 that are mutually connected via a bus 40. The processor 41 can be formed by, for example, a Central Processing Unit (CPU) or the like, and executes a program stored in the memory 42 and controls the entire computer 4A. The memory 42 can be formed by, for example, a computer-readable storage medium including a non-transitory (Non-Transitory) computer-readable storage medium such as a semiconductor device, a magnetic recording medium, an optical recording medium, or a magnetooptical recording medium. The memory 42 stores various programs including a distance measurement program executed by the processor 41, various types of data, or the like.

The input device 43 can be formed by, for example a keyboard or the like operated by a user (or operator) and is used to input commands and data to the processor 41. The display device 44 displays a message to a user, a measurement result of distance measurement processing, or the like. The interface 45 communicably connects the computer 4A and each of the sensors 2-1 to 2-N.

Note that the configuration of the computer 4A is not limited to a hardware configuration in which components of the computer 4A are connected via the bus 40. For example, a general-purpose computer may be used as the computer 4A.

Furthermore, the computer 4A may execute a part of processing of the sensor control unit 21 of each of the sensors 2-1 to 2-N. In this case, the computer 4A may generate a distance image formed by a point cloud in which distance values at respective focusing points are arranged in the order of raster-scanned samples, based on the measurement result from each of the sensors 2-1 to 2-N.

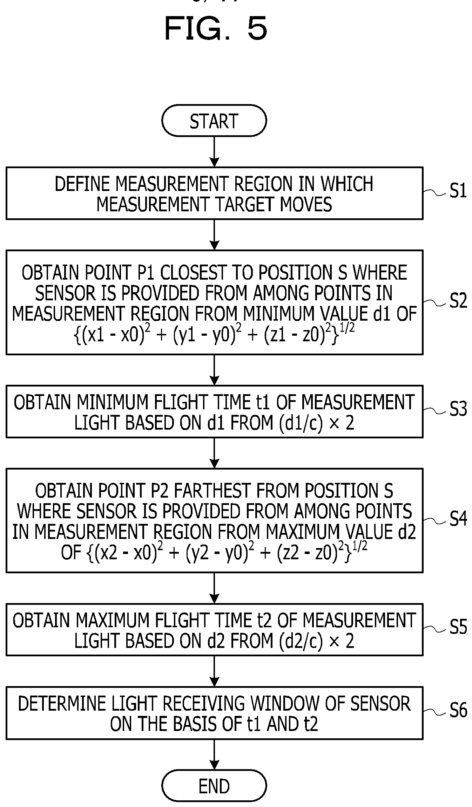

FIG. 5 is a flowchart for explaining an example of light receiving window determination processing. The processing illustrated in FIG. 5 can be executed by executing the program stored in the memory 42 by the processor 41 of the computer 4A. However, the processing illustrated in FIG. 5 may be executed by another computer in advance, and a processing result may be set for the computer 4A (in other words, control device 4).

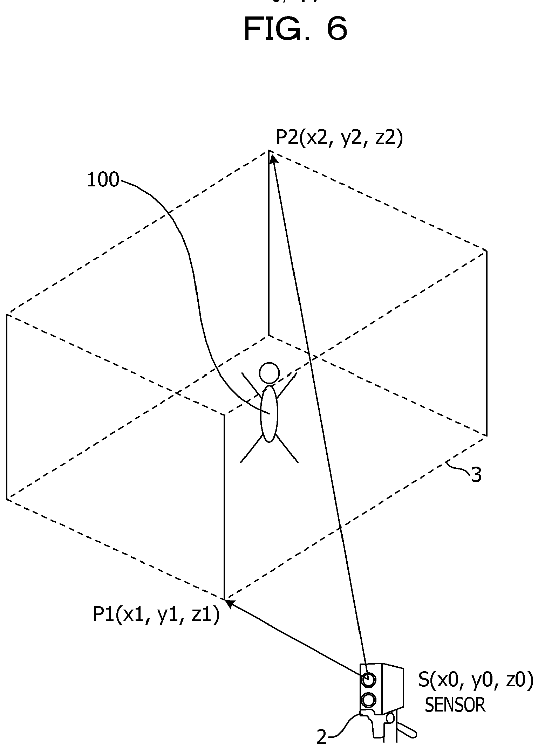

In FIG. 5, in step S1, the processor 41 defines the three-dimensional measurement region 3 in which the measurement target 100 moves. FIG. 6 is a schematic diagram for explaining an example of the light receiving window determination processing. As illustrated in FIG. 6, the measurement region 3 is defined by the XYZ coordinate system.

In step S2, the processor 41 obtains a minimum value d1 of a point P1 (x1, y1, z1) closest from a provision position S (x0, y0, z0) of a sensor 2 from among points in the measurement region 3 from the following formula. $d1 = \{(x1 - x0)^2 + (y1 - y0)^2 + (z1 - z0)^2\}^{1/2}$

In step S3, a speed of light is indicated by c, and the processor 41 obtains a minimum flight time t1 of a laser beam that is measurement light based on the minimum value d1 from $t1 = (d1/c) \times 2$.

In step S4, the processor 41 obtains a maximum value d2 of a point P2 (x2, y2, z2) farthest from the provision position S (x0, y0, z0) of the sensor 2 from among the points in the measurement region 3, from the following formula.

$$d2 = \{(x2 - x0)^2 + (y2 - y0)^2 + (z2 - z0)^2\}^{1/2}$$

In step S5, the processor 41 obtains a maximum flight time t2 of the laser beam based on the maximum value d2 from $t2 = (d2/c) \times 2$.

In step S6, the processor 41 determines a light receiving window W of the sensor 2 on the basis of the minimum flight time t1 and the maximum flight time t2, and the processing ends.

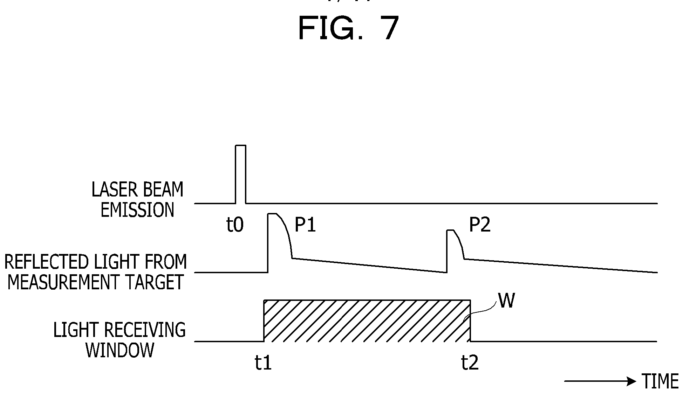

FIG. 7 is a timing chart for explaining an operation of a laser sensor illustrated in FIG. 6. In FIG. 7, laser beam emission of the sensor 2 occurs at a time t0. Of the reflected light from the measurement target 100, P1 indicates reflected light from the point P1 (x1, y1, z1) closest from the provision position S (x0, y0, z0) of the sensor 2, and P2 indicates reflected light from the point P2 (x2, y2, z2) farthest from the provision position S (x0, y0, z0) of the sensor 2. In this example, the light receiving window W of the sensor 2 is set to a period from the time t1 to the time t2.

Note that the light receiving window determination processing on the single sensor 2 has been described with reference to FIGs. 5 to 7. However, in a case where the distance measurement device includes the N sensors 2-1 to 2-N as illustrated in FIG. 3, it is sufficient to execute similar processing on each of the sensors 2-1 to 2-N.

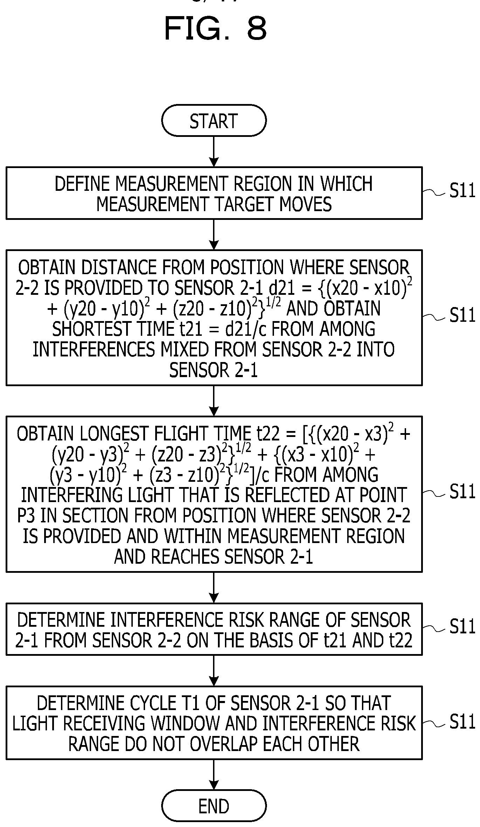

FIG. 8 is a flowchart for explaining an example of interference risk range determination processing and light emission cycle determination processing. The processing illustrated in FIG. 8 can be executed by executing the program stored in the memory 42 by the processor 41 of the computer 4A. However, the processing illustrated in FIG. 8 may be executed by another computer in advance, and a processing result may be set for the computer 4A (in other words, control device 4).

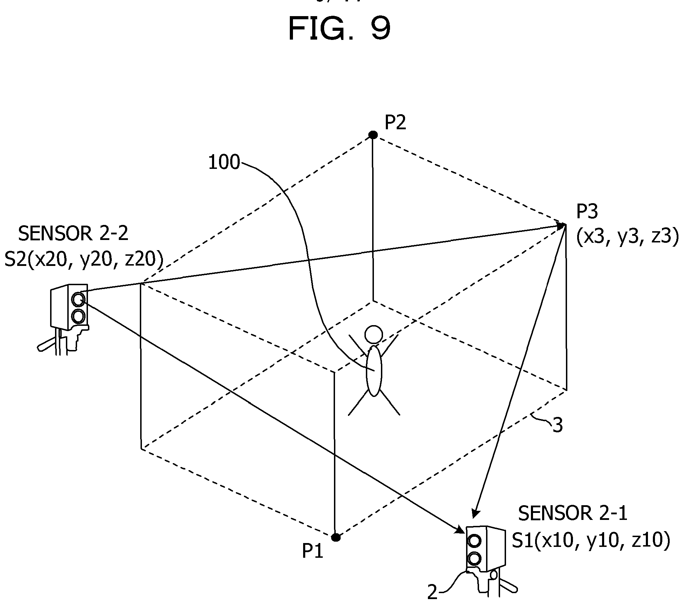

In FIG. 8, in step S11, the processor 41 defines the three-dimensional measurement region 3 in which the measurement target 100 moves. FIG. 9 is a schematic diagram for explaining an example of the interference risk range determination processing and the light emission cycle determination processing. As illustrated in FIG. 9, the measurement region 3 is defined by the XYZ coordinate system.

In step S12, the processor 41 obtains a distance d21 from a provision position S2 (x20, y20, z20) of the sensor 2-2 to a provision position S1 (x10, y10, z10) of the sensor 2-1 from the following formula. $d21 = \{(x20 - x10)^2 + (y20 - y10)^2 + (z20 - z10)^2\}^{1/2}$

The distance d21 described above is interfering light (in other words, interference caused by direct light) that flies (or propagate) the shortest distance among interfering light that is mixed from the sensor 2-2 into the sensor 2-1, and a flight time t21 is obtained from $t21 = d21/c$.

In step S13, the processor 41 obtains a flight time t22 of interfering light that flies the longest distance among interfering light that is reflected at a point P3 (x3, y3, z3) in a section from the provision position S2 of the sensor 2-2 and within the measurement region 3 and reaches the sensor 2-1, from the following formula. $t22 = [\{(x20 - x3)^2 + (y20 - y3)^2 + (z20 - z3)^2\}^{1/2} + \{(x3 - x10)^2 + (y3 - y10)^2 + (z3 - z10)^2\}^{1/2}]/c$

In step S14, the processor 41 determines the interference risk range $R_{I2}$ of the sensor 2-1 from the sensor 2-2 on the basis of the flight times t21 and t22.

In step S15, the processor 41 determines the light emission cycle T1 of the sensor 2-1 so that the light receiving window $W_1$ of the sensor 2-1 and the interference risk range $R_{I2}$ are not superimposed, and the processing ends. As in a case of FIG. 2, the laser beam emission cycles of the sensors 2-1 and 2-2 are the same light emission cycle T1.

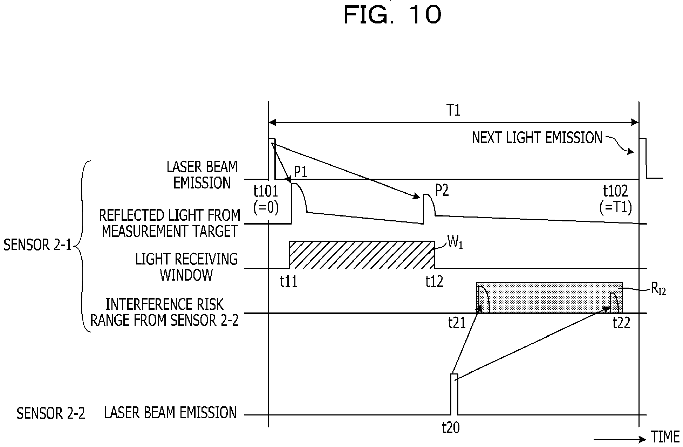

FIG. 10 is a timing chart for explaining operations of laser sensors illustrated in FIG. 9. In FIG. 10, the laser beam emission of the sensor 2-1 occurs at a time t101, and next laser beam emission occurs at a time t102. Of the reflected light from the measurement target 100, P1 indicates reflected light from the point P1 closest to the provision position S1 of the sensor 2-1, and P2 indicates reflected light from the point P2 farthest from the provision position S1 of the sensor 2-1. In this example, the light receiving window $W_1$ of the sensor 2-1 is set to a period from a time t11 to a time t12. The interference risk range $R_{I2}$ from the sensor 2-2 is set to a period from a time t21 to a time t22. The interference risk range $R_{I2}$ is a period that may include an interference caused by direct light from the sensor 2-2 and an interference caused by the reflected light from the sensor 2-2 via the measurement target 100 and is set to absorb the interferences. On the other hand, in this example, the laser beam emission of the sensor 2-2 occurs at a time t20.

The interference risk range determination processing and the light emission cycle determination processing of the sensor 2-1 considering the sensor 2-2 have been described with reference to FIGs. 8 to 10. However, in a case where the distance measurement device includes the N sensors 2-1 to 2-N as illustrated in FIG. 3, it is sufficient that similar processing be executed on each of the sensors 2-2 to 2-N.

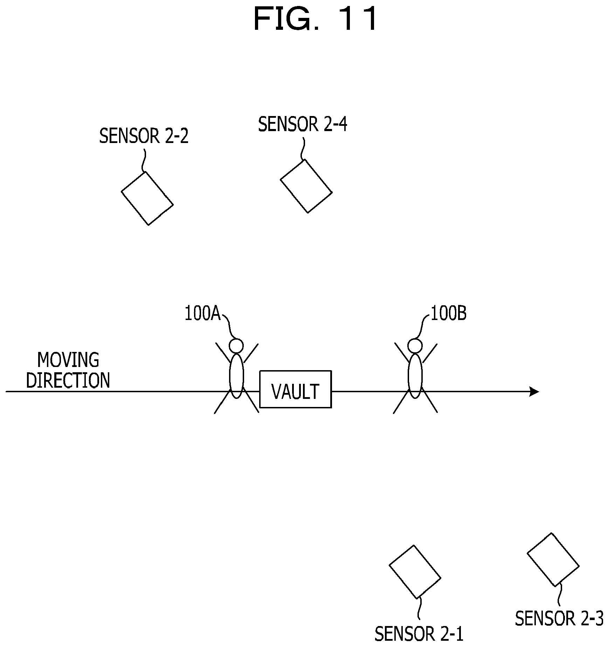

FIG. 11 is a schematic diagram for explaining measurement processing according to the first embodiment of the distance measurement device. In this example, for convenience of explanation, it is assumed that N = 4, and the distance measurement device includes four sensors 2-1 to 2-4. The measurement target 100 is, for example, a gymnast who moves in a moving direction indicated by an arrow and performs a vault, the measurement target 100A is a measurement target 100 at a position A at the time when the performance starts, and the measurement target 100B is a measurement target 100 at a position B at the time when the performance ends.

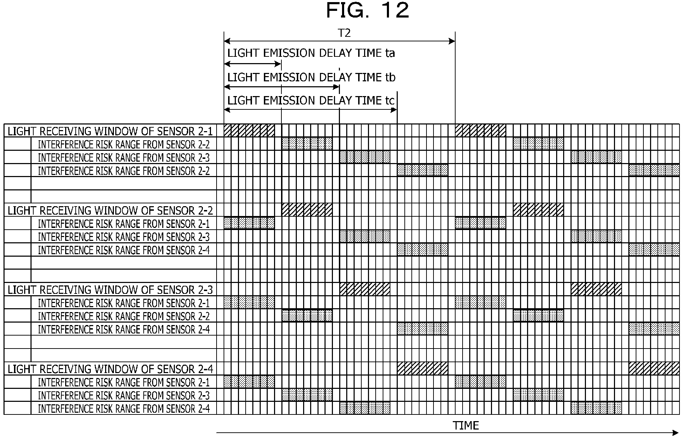

FIG. 12 is a diagram for explaining operations of laser sensors according to the first embodiment of the distance measurement device. In a case where the distance measurement device includes four sensors 2-1 to 2-4, for example, interferences from the respective sensors 2-2 to 2-4 occur with respect to the sensor 2-1. Compared to a case where the distance measurement device includes the two sensors 2-1 and 2-2 illustrated in FIGs. 1 and 2, FIG. 12 simply extracts and illustrates only light receiving windows of the respective sensors 2-1 to 2-4 and interference risk ranges from the another sensors.

In FIG. 12, for example, regarding the sensor 2-1, the light receiving window of the sensor 2-1, the interference risk range from the sensor 2-2, the interference risk range from the sensor 2-3, and the interference risk range from the sensor 2-4 are illustrated, and the same applies to the sensors 2-2 to 2-4. In FIG. 12, for example, regarding the single sensor 2-1, the three interference risk ranges including the interference risk range from the sensor 2-2, the interference risk range from the sensor 2-3, and the interference risk range from the sensor 2-4 are set not to overlap the light receiving window of the sensor 2-1. This is because an interference occurs when the interference risk range overlaps the light receiving window.

As illustrated in FIG. 12, for each of the sensors 2-1 to 2-4, the light receiving window and the interference risk range are set not to overlap each other. Therefore, the sensor 2-2 emits light at a timing delayed by a light emission delay time ta with respect to the sensor 2-1, the sensor 2-3 emits light at a timing delayed by a light emission delay time tb with respect to the sensor 2-1, and the sensor 2-4 emits light at a timing delayed by a light emission delay time tc with respect to the sensor 2-1. The light emission delay times ta, tb, and tc are different from each other with respect to, for example, the laser beam emission timing of the sensor 2-1 (zero light emission delay time) to be a reference. In other words, for example, a light emission cycle T2 of the sensors 2-1 to 2-4 is determined to be a cycle having a time width including all the time period from the light receiving window of the sensor 2-1 to the light receiving window of the sensor 2-4.

The light receiving windows of the sensors 2-1 to 2-4 are periods that are immediately after the light projection (laser beam emission) by the respective sensors 2-1 to 2-4 and do not overlap each other. Furthermore, the interference risk range of each sensor (for example, sensor 2-1) from the another sensors (for example, sensors 2-2 to 2-4) is a period that is immediately after light projection (laser beam emission) by the another sensors and does not overlap the light receiving window of the sensor. Therefore, by setting the light receiving window of each sensor and each interference risk range not to overlap each other and narrowing intervals as possible, it is possible to shorten measurement times by the sensors 2-1 to 2-4 of the distance measurement device 1.

For example, in PTL 3 described above, a relationship between a measurement range and a cycle is one ms with respect to 300 ns, which is above 333 times. On the other hand, because a concept of the light receiving window is set in the present embodiment, it is not needed to lengthen the cycle with respect to the measurement range with no reason, and it is possible to set a minimum requirement value of the cycle. In other words, for example, it is possible to increase the number of times of light emission per second, and it is possible to increase a resolution, a frame rate, or the like.

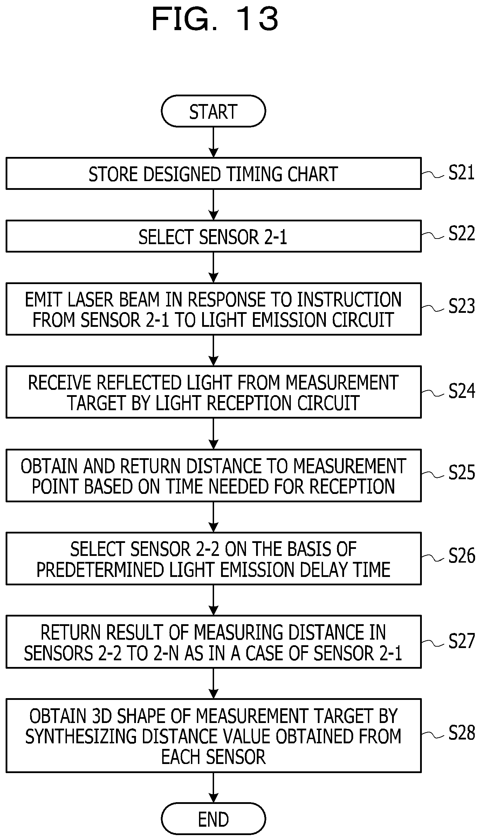

FIG. 13 is a flowchart for explaining measurement processing according to the first embodiment of the distance measurement device. The processing illustrated in FIG. 13 can be executed by executing the program stored in the memory 42 by the processor 41 of the computer 4A.

In FIG. 13, in step S21, the processor 41 stores a timing chart that has been designed in advance in the memory 42. The timing chart includes information such as a light emission cycle, a light emission delay time, a light receiving window, or the like of each of the sensors 2-1 to 2-4.

In step S22, the processor 41 first selects a single sensor, for example, the sensor 2-1.

In step S23, the processor 41 instructs the light emission circuit 22 of the sensor 2-1 via the sensor control unit 21 of the selected sensor 2-1 to emit a laser beam from the sensor 2-1 with a light emission cycle and a light emission delay time (for example, zero) for the sensor 2-1.

In step S24, the processor 41 instructs the light reception circuit 23 of the sensor 2-1 via the sensor control unit 21 of the sensor 2-1 to receive the reflected light from the measurement target 100 with the light receiving window for the sensor 2-1. Because the light receiving window for the sensor 2-1 is set for the light reception circuit 23 of the sensor 2-1, the light reception circuit 23 receives only reflected light (of own light) reflected by the measurement target 100.

In step S25, the processor 41 instructs the sensor control unit 21 of the sensor 2-1 to calculate and return a distance to a measurement point based on a time needed for reception of the reflected light (of own light) by the light reception circuit 23 of the sensor 2-1.

In step S26, the processor 41 selects the sensor 2-2 on the basis of a light emission delay time for the next sensor 2-2. The light emission delay time for the sensor 2-2 is delayed by ta with respect to the light emission delay time (zero) for the sensor 2-1.

As in steps S23 to S26 described above, in step S27, the processor 41 instructs the sensor control units 21 of the sensors 2-2 to 2-N to calculate and return the distance similarly to a case of the sensor 2-1.

In step S28, the processor 41 obtains a 3D shape of the measurement target 100 by synthesizing distance values obtained from the respective sensors 2-1 to 2-N, and the processing ends.

Therefore, the distance measurement device 1 generates a distance image formed by a point cloud in which distance values at respective focusing points are arranged in the order of samples obtained by raster-scanning the measurement target 100 that moves within the three-dimensional measurement region 3. The plurality of laser sensors 2-1 to 2-N projects laser beams and receives reflected light from the measurement target 100. The control device 4 or the control device 4 and the sensor control unit 21 can form a control method for driving the plurality of laser sensors 2-1 to 2-N as follows. Each of the laser sensors 2-1 to 2-N is driven so as not to overlap the light receiving window for receiving only the reflected light of the own light with the interference risk range in which the interference caused by the laser beam from the another laser sensor is concerned on the basis of the measurement region 3 and the provision positions of the laser sensors 2-1 to 2-N. Moreover, each of the laser sensors 2-1 to 2-N is driven at the same light emission cycle in a state where light emission start times of the laser sensors 2-1 to 2-N are deviated from each other.

Therefore, according to the present embodiment, it is possible to avoid an interference between the plurality of laser sensors and generate a high-resolution distance image at high speed.

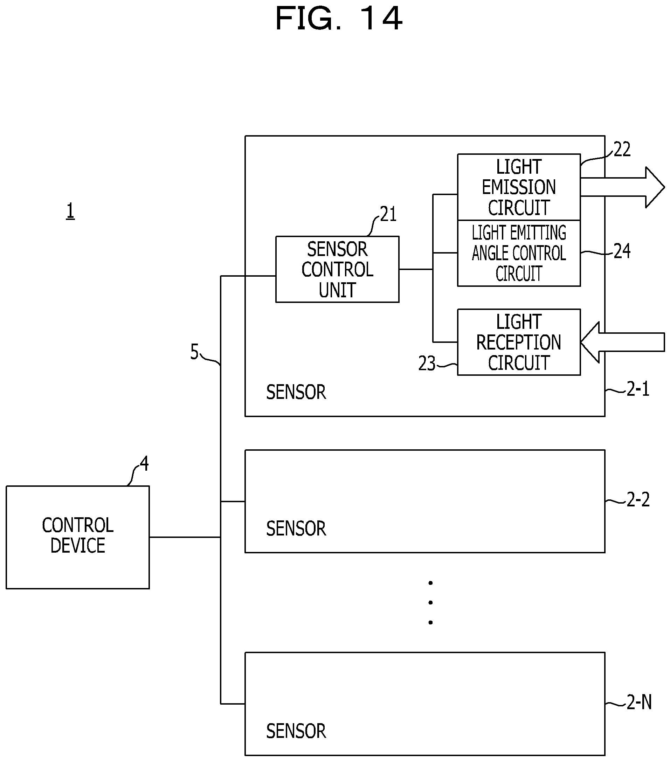

FIG. 14 is a block diagram illustrating a configuration of a second embodiment of the distance measurement device. In FIG. 14, a part that is substantially the same as that in FIG. 3 is denoted with the same reference numeral, and description thereof will be omitted. In the present embodiment, each of the sensors 2-1 to 2-N further includes a light emitting angle control circuit 24. In response to an instruction from the control device 4 via the sensor control unit 21, the light emitting angle control circuit 24 changes a light projection direction of a laser beam of a sensor to a direction in which an interference caused by direct light to the another laser sensor can be avoided, after a measurement handling time of the sensor to which the light emitting angle control circuit 24 belongs ends. For example, the light projection direction of the laser beam can be changed by controlling a reflection (or deflection) angle of the laser beam by the two-dimensional MEMS mirror by a well-known method. Furthermore, in a case of a configuration in which the sensor is mounted on a movable unit, the light projection direction of the laser beam can be changed, for example, by driving the movable unit by a well-known method.

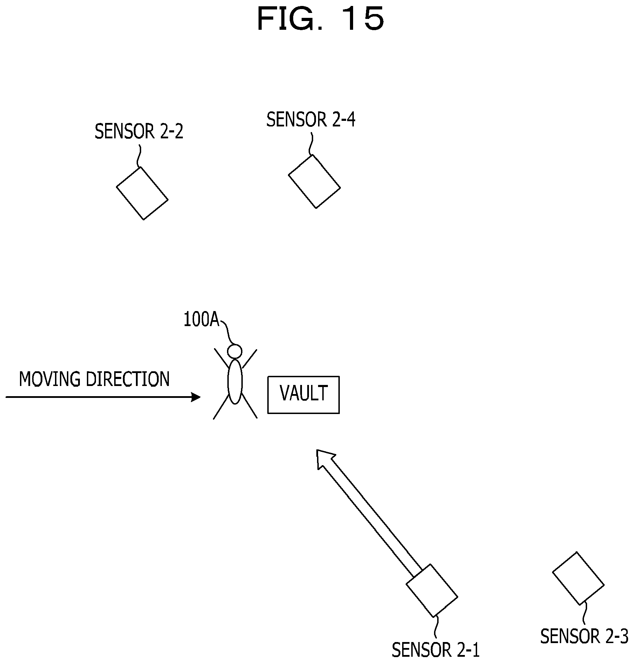

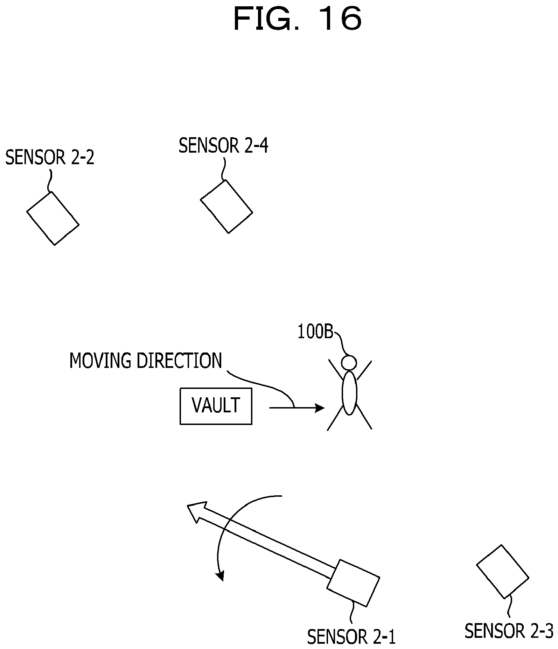

FIGs. 15 and 16 are schematic diagrams for explaining measurement processing according to the second embodiment of the distance measurement device. In this example, the measurement target 100A illustrated in FIG. 15 is a gymnast who starts to perform a vault and jumps onto a springboard at a position illustrated in FIG. 15 and places his/her hand on the vault that is an example of an apparatus. The sensors 2-1 and 2-2 provided at substantially opposite positions measure the measurement target 100A in this state. Furthermore, the measurement target 100B illustrated in FIG. 16 is a gymnast who ends a performance of a vault and twists and turns in the air after placing his/her hands on the vault at a position illustrated in FIG. 16 and lands on a mat. The sensors 2-3 and 2-4 provided at substantially opposite positions measure the measurement target 100B in this state. In FIGs. 15 and 16, arrows indicate moving directions of the measurement targets 100A and 100B.

Because the measurement handling times of the sensors 2-1 and 2-2 have already ended in the state illustrated in FIG. 16, for example, by changing the light projection direction of the laser beam of the sensor 2-1, it is possible to avoid an interference caused by the laser beam from the sensor 2-1 reaching the another sensor 2-4 or the like. Furthermore, in this example, by changing the light projection direction of the laser beam of the sensor 2-2, it is possible to avoid an interference caused by the laser beam from the sensor 2-2 reaching the another sensor 2-3 or the like. By changing the light projection direction of the laser beam of the sensor 2-1 of which the measurement handling time ends to, for example, the counterclockwise direction in FIG. 16, it is possible to avoid the interference caused by the direct light to the sensor 2-4 provided at a position substantially opposed to the sensor 2-1. Similarly, by changing the light projection direction of the laser beam of the sensor 2-2 of which the measurement handling time ends to, for example, the clockwise direction in FIG. 16, it is possible to avoid the interference caused by the direct light to the sensor 2-3 provided at a position substantially opposed to the sensor 2-2. That is, for example, for the light receiving window of the sensor 2-4, the interference risk range from the sensor 2-1 of which the measurement handling time has ended is no longer an interference risk range, and even if the light receiving window of the sensor 2-4 and the interference risk range from the sensor 2-1 that has ended the measurement are superimposed, an interference does not occur. Similarly, for the light receiving window of the sensor 2-3, the interference risk range from the sensor 2-2 of which the measurement handling time has ended is no longer an interference risk range, and even if the light receiving window of the sensor 2-3 and the interference risk range from the sensor 2-2 that has ended the measurement are superimposed, an interference does not occur.

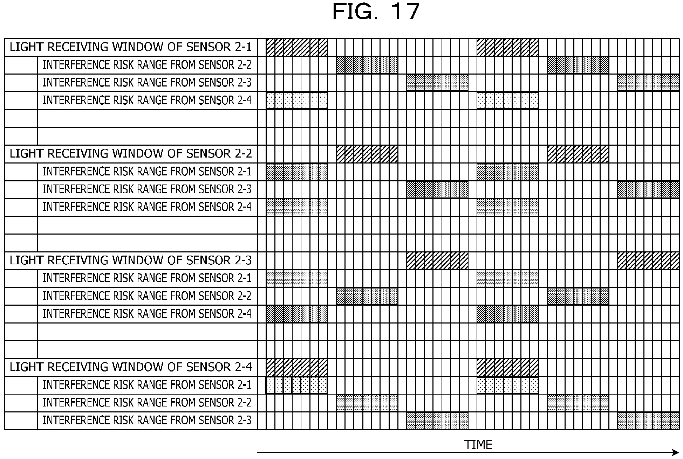

FIG. 17 is a diagram for explaining operations of laser sensors according to the second embodiment of the distance measurement device. In FIG. 17, a part that is the same as that in FIG. 12 is denoted with the same reference numeral, and description thereof is omitted. In FIG. 17, an interference risk range that is no longer the interference risk range from the sensors 2-1 to 2-4 that have ended the measurement is illustrated in halftone.

In the present embodiment, as illustrated in FIG. 16, a light projection direction of the laser beam of the sensor 2-1 is changed to a counterclockwise direction after a player moves from a position 100A to a position 100B so that the laser beam of the sensor 2-1 does not reach the sensor 2-4. In other words, for example, there is no concern that an interference occurs due to direct light. Therefore, it is possible to set a light emission start time of the sensor 2-4 to be the same as that of the sensor 2-1 and to superimpose the light receiving window of the sensor 2-4 on the light receiving window of the sensor 2-1 on the time chart. In other words, for example, a position of the light receiving window of the sensor 2-4 that ends the measurement at the latest can be accelerated without considering interference avoidance, and as a result, it is possible to shorten the light emission cycles of the sensors 2-1 to 2-4.

Note that, instead of changing the light projection direction of the laser beam, a method for turning off the laser beam of the sensor is considered. However, when the laser beam is turned off once and then turned on, for example, there is a case where a MEMS mirror is slightly deformed due to a change in thermal energy received from the laser beam. Therefore, in a case where next measurement needs to be performed quickly, the deformation causes an error in a distance image measurement result. In this case, it is preferable to change the light projection direction of the laser beam as described above rather than switching on/off of the laser beam.

According to each embodiment described above, by setting the light emission cycle so as not to superimpose the light receiving window and the interference risk range of each sensor, it is possible to shorten the light emission cycle, and it is possible to avoid the interference between the plurality of sensors and generate a high-resolution distance image at high speed. Furthermore, as in the second embodiment, the light projection direction of the laser beam of the sensor of which the measurement handling time has ended is changed and the interference caused by the direct light to the another sensor is avoided so that the interference risk range from the sensor of which the measurement handling time has ended is no longer an interference risk range. Therefore, a position of the light receiving window of the sensor that ends the measurement at the latest can be accelerated without considering interference avoidance, and as a result, and it is possible to further shorten the light emission cycle of the sensor.

The distance measurement device according to the disclosure can be applied to a rating assistance system, an in-vehicle system, or the like. An example of the rating assistance system, for example, assists rating of a gymnastics performance on the basis of an output of the distance measurement device. In this case, rating can be performed, for example, by executing a rating program by the computer 4A illustrated in FIG. 4. It is sufficient that the computer 4A acquire skeleton information of a gymnast by a well-known method on the basis of three-dimensional data and distance images from the sensors 2-1 to 2-N. Because the skeleton information of the gymnast includes a three dimensional position of each joint of the gymnast in each frame, it is possible to recognize a technique of a gymnastics performance from the skeleton information and rates the gymnastics performance from a degree of completion of the technique. Because the distance measurement device can track a measurement target with high accuracy, it is possible rate the gymnastics performance with high accuracy by using the output of the distance measurement device, and it is possible to enhance reliability of the rating assistance system.

An example of the in-vehicle system, for example, recognizes a position, a type, or the like of a measurement target in front of a vehicle on the basis of the output of the distance measurement device. In this case, the type of the measurement target includes a pedestrian, other vehicle, or the like, and the measurement target is recognized by executing a recognition program by the computer 4A, for example. It is sufficient that the computer 4A acquire shape information of the measurement target by a well-known method on the basis of the three-dimensional data and the distance images from the sensors 2-1 to 2-N. Because the shape information of the measurement target includes a three-dimensional position of each portion of the measurement target in each frame, it is possible to recognize the position, the type, or the like of the measurement target from the shape information and determine an approaching degree, a danger degree, or the like. Because the distance measurement device can track the measurement target with high accuracy, the position, the type, or the like of the measurement target can be recognized with high accuracy, and it is possible to enhance reliability of the in-vehicle system.

Note that serial numbers assigned to the respective embodiments described above do not indicate the priority of the preferred embodiments.

## Claims

1. A distance measurement device comprising:

   a plurality of laser sensors configured to project a laser beam and receive reflected light from a measurement target that moves within a measurement region; and
   a control unit configured to drive, based on the measurement region and a provision position of the plurality of laser sensors, each of the laser sensors at a light emission cycle in which a light receiving window that receives reflected light of own light and an interference risk range are included the interference risk range being a range in which an interference is caused by a laser beam from another laser sensor, wherein
   the control unit controls to laser beam emission timings of the plurality of laser sensors so as to be different from each other.

2. The distance measurement device according to claim 1, wherein
the control unit controls to the laser beam emission timings being deviated by light emission delay times different from each other with respect to a laser sensor to be a reference.

3. The distance measurement device according to claim 1 or 2, wherein
the control unit is further configured to:

define the measurement region by an XYZ coordinate system,
obtain a minimum value d1 of a point P1 (x1, y1, z1) closest to a provision position S (x0, y0, z0) of a single laser sensor among points in the measurement region from a formula which is $d1 = \{(x1 - x0)^2 + (y1 - y0)^2 + (z1 - z0)^2\}^{1/2}$,
obtain a minimum flight time t1 of the laser beam from the minimum value d1 from a formula which is $t1 = (d1/c) \times 2$, c indicate a speed of light,
obtain a maximum value d2 of a point P2 (x2, y2, z2) farthest from the provision position S (x0, y0, z0) among the points in the measurement region from a formula which is $d2 = \{(x2 - x0)^2 + (y2 - y0)^2 + (z2 - z0)^2\}^{1/2}$,
obtain a maximum flight time t2 of the laser beam from the maximum value d2 from a formula which is $t2 = (d2/c) \times 2$, and
determine a light receiving window of the single laser sensor from the minimum flight time t1 and the maximum flight time t2.

4. The distance measurement device according to claim 1 or 2, wherein
the control unit is further configured to:

define the measurement region by an XYZ coordinate system,
obtain a distance d21 from a provision position S2 (x20, y20, z20) of a second laser sensor to a provision position S1 (x10, y10, z10) of a first laser sensor from a formula which is $d21 = \{(x20 - x10)^2 + (y20 - y10)^2 + (z20 - z10)^2\}^{1/2}$,
obtain a first flight time t21 from a formula which is $t21 = d21/c$, c indicate a speed of light,
obtain a second flight time t22 of interfering light that flies a longest distance among interfering light that is reflected at a point P3 (x3, y3, z3) that is located in a section from the provision position S2 within the measurement region and reaches the first laser sensor from a formula which is $t22 = [\{(x20 - x3)^2 + (y20 - y3)^2 + (z20 - z3)^2\}^{1/2} + \{(x3 - x10)^2 + (y3 - y10)^2 + (z3 - z10)^2\}^{1/2}]/c$,
determine an interference risk range of the first laser sensor from the second laser sensor based on the first flight time t21 and the second flight time t22, and
the distance d21 is interfering light that flies a shortest distance from among interfering light that is mixed from the second laser sensor into the first laser sensor.

5. The distance measurement device according to any one of claims 1 to 4, wherein
light receiving windows of each of the sensors are periods immediately after light projection of the respective sensors and do not overlap each other, and
an interference risk range of each of the sensors from another sensor is a period that is immediately after light projection by the another sensor and does not overlap the own light receiving window.

6. The distance measurement device according to any one of claims 1 to 3, wherein
each of the plurality of laser sensors includes a sensor control unit, a light emission circuit, and a light reception circuit, and
the control unit is further configured to:

store a timing chart that has been designed in advance and includes information regarding the light emission cycle, a light emission delay time, and a light receiving window of the plurality of sensors,
instruct the light emission circuit via the sensor control unit of a first laser sensor which is selected to emit a laser beam at the light emission cycle and with the light emission delay time for the first laser sensor,
instruct the light reception circuit via the sensor control unit of the first laser sensor to receive reflected light from the measurement target by the light receiving window for the first laser sensor,
instruct the sensor control unit of the first laser sensor to calculate and return a distance to a measurement point based on time needed for the reception,

select the second laser sensor based on the light emission delay time for the second laser sensor,
instruct remaining laser sensors including the second laser sensor to calculate and return a distance similarly to the first laser sensor, and
obtain a three-dimensional shape of the measurement target by synthesizing distance values respectively obtained from the plurality of laser sensors.

7. The distance measurement device according to any one of claims 1 to 6, wherein
each of the plurality of laser sensors includes a light emitting angle control circuit that changes a light projection direction of a laser beam, and
the control unit instructs the light emitting angle control circuit of at least one laser sensor of the plurality of laser sensors to change a light projection direction of a laser beam of the one laser sensor to a direction in which an interference caused by direct light to the another laser sensor is avoided after a measurement handling time of the one laser sensor ends.

8. A distance measurement method comprising:

controlling to laser beam emission timings of a plurality of laser sensors which project a laser beam and receive reflected light from a measurement target that moves within a measurement region so as to be different from each other; and
driving, based on the measurement region and a provision position of the plurality of laser sensors, each of the laser sensors at a light emission cycle in which a light receiving window that receives reflected light of own light and an interference risk range are included the interference risk range being a range in which an interference is caused by a laser beam from another laser sensor.

9. The distance measurement method according to claim 8, wherein
the controlling includes controlling to the laser beam emission timings being deviated by light emission delay times different from each other with respect to a laser sensor to be a reference.

10. The distance measurement device according to claim 8 or 9, further comprising:

defining the measurement region by an XYZ coordinate system,
obtaining minimum value d1 of a point P1 (x1, y1, z1) closest to a provision position S (x0, y0, z0) of a single laser sensor among points in the measurement region from a formula which is $d1 = \{(x1 - x0)^2 + (y1 - y0)^2 + (z1 - z0)^2\}^{1/2}$,
obtaining a minimum flight time t1 of the laser beam from the minimum value d1 from a formula which is $t1 = (d1/c) \times 2$, c indicate a speed of light,
obtaining a maximum value d2 of a point P2 (x2, y2, z2) farthest from the provision position S (x0, y0, z0) among the points in the measurement region from a formula which is $d2 = \{(x2 - x0)^2 + (y2 - y0)^2 + (z2 - z0)^2\}^{1/2}$,
obtaining a maximum flight time t2 of the laser beam from the maximum value d2 from a formula which is $t2 = (d2/c) \times 2$, and
determining a light receiving window of the single laser sensor from the minimum flight time t1 and the maximum flight time t2.

11. The distance measurement device according to claim 8 or 9, wherein
defining the measurement region by an XYZ coordinate system,
obtaining a distance d21 from a provision position S2 (x20, y20, z20) of a second laser sensor to a provision position S1 (x10, y10, z10) of a first laser sensor from a formula which is $d21 = \{(x20 - x10)^2 + (y20 - y10)^2 + (z20 - z10)^2\}^{1/2}$,
obtaining a first flight time t21 from a formula which is $t21 = d21/c$, c indicate a speed of light,
obtaining a second flight time t22 of interfering light that flies a longest distance among interfering light that is reflected at a point P3 (x3, y3, z3) that is located in a section from the provision position S2 within the measurement region and reaches the first laser sensor from a formula which is $t22 = [\{(x20 - x3)^2 + (y20 - y3)^2 + (z20 - z3)^2\}^{1/2} + \{(x3 - x10)^2 + (y3 - y10)^2 + (z3 - z10)^2\}^{1/2}]/c$,
determining an interference risk range of the first laser sensor from the second laser sensor based on the first flight time t21 and the second flight time t22, wherein
the distance d21 is interfering light that flies a shortest distance from among interfering light that is mixed from the second laser sensor into the first laser sensor.

12. The distance measurement device according to any one of claims 8 to 11, wherein

light receiving windows of each of the sensors are periods immediately after light projection of the respective sensors and do not overlap each other, and

an interference risk range of each of the sensors from another sensor is a period that is immediately after light projection by the another sensor and does not overlap the own light receiving window.

13. The distance measurement device according to any one of claims 8 to 12, further comprising:

instructing a light at least one laser sensor of the plurality of laser sensors to change a light projection direction of a laser beam of the one laser sensor to a direction in which an interference caused by direct light to the another laser sensor is avoided after a measurement handling time of the one laser sensor ends.

14. A program in which a computer performs processing of:

controlling to laser beam emission timings of a plurality of laser sensors which project a laser beam and receive reflected light from a measurement target that moves within a measurement region so as to be different from each other; and

driving, based on the measurement region and a provision position of the plurality of laser sensors, each of the laser sensors at a light emission cycle in which a light receiving window that receives reflected light of own light and an interference risk range are included the interference risk range being a range in which an interference is caused by a laser beam from another laser sensor.

15. The program according to claim 14, wherein

the controlling includes controlling to the laser beam emission timings being deviated by light emission delay times different from each other with respect to a laser sensor to be a reference.

## FIG. 1

# FIG. 2

SENSOR 2-1 {
LASER BEAM EMISSION
REFLECTED LIGHT RECEPTION FROM MEASUREMENT TARGET
LIGHT RECEIVING WINDOW
INTERFERENCE RISK RANGE FROM SENSOR 2-2
}

T1

A
B
$W_1$
$R_{I2}$

INTERFERENCE $I_{D2}$ CAUSED BY DIRECT LIGHT

INTERFERENCE RISK RANGE FROM SENSOR 2-2

INTERFERENCE $I_{R2}$ CAUSED BY REFLECTED LIGHT

T1/2
T1

SENSOR 2-2 {
LASER BEAM EMISSION
REFLECTED LIGHT RECEPTION FROM MEASUREMENT TARGET
LIGHT RECEIVING WINDOW
INTERFERENCE RISK RANGE FROM SENSOR 2-1
}

A
B
$W_2$
$R_{I1}$

INTERFERENCE $I_{D1}$ CAUSED BY DIRECT LIGHT

INTERFERENCE RISK RANGE FROM SENSOR 2-1

INTERFERENCE $I_{R1}$ CAUSED BY REFLECTED LIGHT

TIME

# FIG. 3

# FIG. 4

4A

| | | |
|---|---|---|
| PROCESSOR 41 | MEMORY 42 | |

40

| | | |
|---|---|---|
| INPUT DEVICE 43 | DISPLAY DEVICE 44 | INTERFACE 45 |

# FIG. 5

```
                    ┌─────────────┐
                    │    START    │
                    └──────┬──────┘
                           │
                           ▼
   ┌─────────────────────────────────────────────┐
   │   DEFINE MEASUREMENT REGION IN WHICH         │──── S1
   │      MEASUREMENT TARGET MOVES                │
   └──────────────────────┬──────────────────────┘
                          │
                          ▼
```

OBTAIN POINT P1 CLOSEST TO POSITION S WHERE SENSOR IS PROVIDED FROM AMONG POINTS IN MEASUREMENT REGION FROM MINIMUM VALUE d1 OF $\{(x1 - x0)^2 + (y1 - y0)^2 + (z1 - z0)^2\}^{1/2}$ ── S2

OBTAIN MINIMUM FLIGHT TIME t1 OF MEASUREMENT LIGHT BASED ON d1 FROM $(d1/c) \times 2$ ── S3

OBTAIN POINT P2 FARTHEST FROM POSITION S WHERE SENSOR IS PROVIDED FROM AMONG POINTS IN MEASUREMENT REGION FROM MAXIMUM VALUE d2 OF $\{(x2 - x0)^2 + (y2 - y0)^2 + (z2 - z0)^2\}^{1/2}$ ── S4

OBTAIN MAXIMUM FLIGHT TIME t2 OF MEASUREMENT LIGHT BASED ON d2 FROM $(d2/c) \times 2$ ── S5

DETERMINE LIGHT RECEIVING WINDOW OF SENSOR ON THE BASIS OF t1 AND t2 ── S6

```
                    ┌─────────────┐
                    │     END     │
                    └─────────────┘
```

# FIG. 6

P2(x2, y2, z2)

100

3

P1(x1, y1, z1)

S(x0, y0, z0)
SENSOR

2

# FIG. 7

# FIG. 8

START

DEFINE MEASUREMENT REGION IN WHICH MEASUREMENT TARGET MOVES — S11

OBTAIN DISTANCE FROM POSITION WHERE SENSOR 2-2 IS PROVIDED TO SENSOR 2-1 $d21 = \{(x20 - x10)^2 + (y20 - y10)^2 + (z20 - z10)^2\}^{1/2}$ AND OBTAIN SHORTEST TIME $t21 = d21/c$ FROM AMONG INTERFERENCES MIXED FROM SENSOR 2-2 INTO SENSOR 2-1 — S11

OBTAIN LONGEST FLIGHT TIME $t22 = [\{(x20 - x3)^2 + (y20 - y3)^2 + (z20 - z3)^2\}^{1/2} + \{(x3 - x10)^2 + (y3 - y10)^2 + (z3 - z10)^2\}^{1/2}]/c$ FROM AMONG INTERFERING LIGHT THAT IS REFLECTED AT POINT P3 IN SECTION FROM POSITION WHERE SENSOR 2-2 IS PROVIDED AND WITHIN MEASUREMENT REGION AND REACHES SENSOR 2-1 — S11

DETERMINE INTERFERENCE RISK RANGE OF SENSOR 2-1 FROM SENSOR 2-2 ON THE BASIS OF $t21$ AND $t22$ — S11

DETERMINE CYCLE T1 OF SENSOR 2-1 SO THAT LIGHT RECEIVING WINDOW AND INTERFERENCE RISK RANGE DO NOT OVERLAP EACH OTHER — S11

END

# FIG. 9

P2

100

P3
(x3, y3, z3)

SENSOR 2-2
S2(x20, y20, z20)

3

SENSOR 2-1
S1(x10, y10, z10)

P1

2

# FIG. 10

# FIG. 11

SENSOR 2-2

SENSOR 2-4

100A

100B

MOVING
DIRECTION

VAULT

SENSOR 2-1

SENSOR 2-3

## FIG. 12

# FIG. 13

START

STORE DESIGNED TIMING CHART — S21

SELECT SENSOR 2-1 — S22

EMIT LASER BEAM IN RESPONSE TO INSTRUCTION FROM SENSOR 2-1 TO LIGHT EMISSION CIRCUIT — S23

RECEIVE REFLECTED LIGHT FROM MEASUREMENT TARGET BY LIGHT RECEPTION CIRCUIT — S24

OBTAIN AND RETURN DISTANCE TO MEASUREMENT POINT BASED ON TIME NEEDED FOR RECEPTION — S25

SELECT SENSOR 2-2 ON THE BASIS OF PREDETERMINED LIGHT EMISSION DELAY TIME — S26

RETURN RESULT OF MEASURING DISTANCE IN SENSORS 2-2 TO 2-N AS IN A CASE OF SENSOR 2-1 — S27

OBTAIN 3D SHAPE OF MEASUREMENT TARGET BY SYNTHESIZING DISTANCE VALUE OBTAINED FROM EACH SENSOR — S28

END

# FIG. 14

# FIG. 15

SENSOR 2-2

SENSOR 2-4

100A

MOVING DIRECTION

VAULT

SENSOR 2-1

SENSOR 2-3

# FIG. 16

SENSOR 2-2

SENSOR 2-4

100B

MOVING DIRECTION

VAULT

SENSOR 2-1

SENSOR 2-3

FIG. 17

| | | | |
|---|---|---|---|
| LIGHT RECEIVING WINDOW OF SENSOR 2-1 | | | |
| | INTERFERENCE RISK RANGE FROM SENSOR 2-2 | | |
| | INTERFERENCE RISK RANGE FROM SENSOR 2-3 | | |
| | INTERFERENCE RISK RANGE FROM SENSOR 2-4 | | |
| | | | |
| | | | |
| LIGHT RECEIVING WINDOW OF SENSOR 2-2 | | | |
| | INTERFERENCE RISK RANGE FROM SENSOR 2-1 | | |
| | INTERFERENCE RISK RANGE FROM SENSOR 2-3 | | |
| | INTERFERENCE RISK RANGE FROM SENSOR 2-4 | | |
| | | | |
| | | | |
| LIGHT RECEIVING WINDOW OF SENSOR 2-3 | | | |
| | INTERFERENCE RISK RANGE FROM SENSOR 2-1 | | |
| | INTERFERENCE RISK RANGE FROM SENSOR 2-2 | | |
| | INTERFERENCE RISK RANGE FROM SENSOR 2-4 | | |
| | | | |
| | | | |
| LIGHT RECEIVING WINDOW OF SENSOR 2-4 | | | |
| | INTERFERENCE RISK RANGE FROM SENSOR 2-1 | | |
| | INTERFERENCE RISK RANGE FROM SENSOR 2-2 | | |
| | INTERFERENCE RISK RANGE FROM SENSOR 2-3 | | |

TIME

Europäisches
Patentamt

European
Patent Office

Office européen
des brevets

# EUROPEAN SEARCH REPORT

Application Number

EP 21 17 0888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/200873 A1 (SCHMIDT BODO [US]) 25 June 2020 (2020-06-25) * paragraphs [0003], [0033], [0039], [0041], [0092] - [0095], [0040]; figures 1,2,8 * | 1-3,5-7, 10,12-15 | INV. G01S7/487 G01S17/87 G01S17/89 G01S17/931 |
| A | US 2017/269215 A1 (HALL DAVID S [US] ET AL) 21 September 2017 (2017-09-21) * paragraphs [0064] - [0065]; figure 8 * | 1-15 | |
| A | US 2017/328993 A1 (WARKE NIRMAL C [US] ET AL) 16 November 2017 (2017-11-16) * paragraphs [0028], [0033] - [0036]; figures 6,10 * | 1-15 | |

TECHNICAL FIELDS
SEARCHED    (IPC)

G01S

The present search report has been drawn up for all claims

| Place of search | Date of completion of the search | Examiner |
|---|---|---|
| Munich | 8 October 2021 | Metz, Carsten |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 17 0888

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2021

| Patent document cited in search report | | Publication date | Patent family member(s) | | Publication date |
|---|---|---|---|---|---|
| US 2020200873 | A1 | 25-06-2020 | NONE | | |
| US 2017269215 | A1 | 21-09-2017 | CA | 3017735 A1 | 28-09-2017 |
| | | | CN | 109154661 A | 04-01-2019 |
| | | | EP | 3430428 A1 | 23-01-2019 |
| | | | JP | 2019512710 A | 16-05-2019 |
| | | | US | 2017269215 A1 | 21-09-2017 |
| | | | US | 2019011563 A1 | 10-01-2019 |
| | | | WO | 2017164989 A1 | 28-09-2017 |
| US 2017328993 | A1 | 16-11-2017 | US | 2017328993 A1 | 16-11-2017 |
| | | | US | 2020292681 A1 | 17-09-2020 |

EPO FORM P0459

For more details about this annex : see Official Journal of the European Patent Office, No. 12/82

**REFERENCES CITED IN THE DESCRIPTION**

**Patent documents cited in the description**

- JP 2018063222 A
- JP 2017125682 A
- JP 2013235390 A